**Europäisches Patentamt**

**European Patent Office**

**Office européen des brevets**

(19)

(11) Veröffentlichungsnummer: **0 102 406**
**B1**

(12) **EUROPÄISCHE PATENTSCHRIFT**

(45) Veröffentlichungstag der Patentschrift:
**17.02.88**

(51) Int. Cl.⁴: **A 01 F 25/20**

(21) Anmeldenummer: **82108136.1**

(22) Anmeldetag: **03.09.82**

(54) Aufnahme- und Verteilungswagen für Silage, Stroh und dgl. Gut.

(43) Veröffentlichungstag der Anmeldung:
**14.03.84 Patentblatt 84/11**

(45) Bekanntmachung des Hinweises auf die Patenterteilung:
**17.02.88 Patentblatt 88/7**

(84) Benannte Vertragsstaaten:
**AT BE CH DE FR GB IT LI NL SE**

(56) Entgegenhaltungen:
**EP - A - 0 032 776**
**EP - A - 0 035 435**
**CA - A - 992 486**

(73) Patentinhaber: **von der Heide, Hans, Ibbenbürener Strasse 17, D-4533 Laggenbeck (DE)**

(72) Erfinder: **von der Heide, Hans, Ibbenbürener Strasse 17, D-4533 Laggenbeck (DE)**

(74) Vertreter: **Patentanwälte Schulze Horn und Hoffmeister, Goldstrasse 36, D-4400 Münster (DE)**

## Beschreibung

Die Erfindung betrifft einen Aufnahme- und Verteilungswagen für Silage, Stroh und dgl. Gut, mit einem Laderaum, der an seiner einen Querseite eine Schneideinrichtung für Silageblöcke mit einem an einer U-förmigen Brücke umlaufenden länglichen Messer und mit in einer in einem etwa der Länge des Messers entsprechenden Abstand gelegenen Ebene zur Brücke parallel verlaufenden Zinken zur Gutaufnahme aufweist, und der an seiner anderen Querseite eine das auszutragende Gut seitlich austragende Fördereinrichtung aufweist, wobei die Schneideinrichtung über wenigstens einen Lenker heb- und senkbar an dessen Ende um eine horizontale Achse verschwenkbar ist.

Ein Wagen der genannten Art ist aus der EP-A-35 435 bekannt. Bei diesem Wagen wird ein Silageblock nach dem Ausschneiden mit der Schneideinrichtung auf einem Zinkenrost in horizontaler Richtung in den endseitig offenen Laderaum transportiert. Dort wird der Block auf einem zwischen die Zinken des Zinkenrostes ragenden Bodenrost abgesetzt und der Zinkenrost wird durch leichtes Neigen der gesamten Schneideinrichtung unter dem abgesetzten Block herausgezogen, wobei der Zinkenrost weiter in der vorherigen Bewegungsrichtung fortbewegt wird. Nachdem der Zinkenrost von dem Silageblock freigekommen ist, wird er zusammen mit der zugehörigen Schneideinrichtung leer nach oben, über den eingeladenen Block hinweg und dann nach unten wieder in seine Aufnahmeposition in Höhe des Laderaumbodens bewegt. Eine die weitere Bearbeitung erleichternde Vorlockerung des Silageblockes erfolgt hier nicht. Ersichtlicherweise benötigt dieser Wagen ein offenes Laderaumende, durch welches die Silageblöcke eingebracht werden. Dies schliesst nachteilig eine sinnvolle Verwendung dieses Wagens für den Transport von Schüttgut, wie z.B. Getreide, aus, da dieses während der Fahrt aus dem Laderaum herausfallen würde.

Nachteilig ist weiterhin, dass die Ladeeinrichtung dieses Wagens, bestehend aus einem einzelnen zentralen Lenker mit der mit ihrer Unterseite daran angelenkten, in sich starren Einheit aus Zinkenrost, Rahmen- und Schneideinrichtung nicht für ein Heben und Bewegen von schweren Lasten, wie z.B. kompakten Silageblöcken, wegen der auftretenden ungünstigen Hebelkräfte geeignet ist.

Schliesslich sei noch angeführt, dass der auf dem Boden des Laderaumes angeordnete Bodenrost mit seinen längsverlaufenden, die Zinken des bewegbaren Zinkenrostes zwischen sich aufnehmenden Roststäben die Anordnung von Fördermitteln im Bodenbereich unmöglich macht oder zumindest sehr erschwert.

Es stellt sich daher die Aufgabe, einen Aufnahme- und Verteilungswagen der eingangs genannten Art zu schaffen, der die aufgeführten Nachteile vermeidet und der insbesondere eine Vorlockerung von Silageblöcken erlaubt, der auch den Transport von Schüttgütern ermöglicht und bei dem im Bodenbereich des Laderaumes problemlos Fördermittel angeordnet sein können.

Die Lösung dieser Aufgabe gelingt erfindungsgemäss durch einen Aufnahme- und Verteilungswagen der eingangs genannten Art, bei welchem

– die Zinken zur Brücke der Schneideinrichtung hydraulisch schwenkbar sind,

– die Schneideinrichtung in ihrem unteren Teil über hydraulisch betätigte Schwenkhebel an zwei hydraulisch heb- und senkbaren Lenkern angelenkt ist, die beidseitig neben dem Laderaum verlaufen und an welchen die Schneideinrichtung ein Einkippen des von den Zinken getragenen Gutes von oben in den Laderaum ermöglichend hebbar und über den Laderaum kippbar ist, und

– der Boden des Laderaumes als Kratzförderer ausgebildet ist.

Vorteilhaft wird bei dem Wagen gemäss Erfindung der einzuladende Silageblock von oben her in den Laderaum abgeworfen, wodurch eine wirkungsvolle Vorlockerung des Blockes vor der weiteren Zerkleinerung und Austragung erreicht wird. Die nachfolgenden Zerkleinerungsvorgänge gehen damit leichter von statten, wodurch die entsprechenden Zerkleinerungsorgane einem wesentlich geringeren Verschleiss unterliegen und leichter ausgeführt sein können.

Weiterhin ist von Vorteil, dass das Laderaumende des Wagens zumindest teilweise geschlossen sein kann, ohne dass dies den Ladevorgang behindert, wodurch ohne Umbauarbeiten ein auch für Schüttguttransport geeigneter Laderaum geschaffen wird. Durch die problemlos mögliche Anordnung eines Kratzförderer-Bodens wird auf einfache und zuverlässige Weise für einen gleichmässigen Weitertransport des eingeladenen Gutes zur seitlich austragenden Fördereinrichtung des Wagens gesorgt.

Die Zerkleinerung sowie der Austrag des aufgenommenen Gutes aus dem Laderaum erfolgt vorzugsweise mittels einer oberhalb der seitlich austragenden Fördereinrichtung angeordneten Austragsvorrichtung, welche zumindest aus einem von unten nach oben schräg nach vorn geneigten Kratzband besteht, dessen Kratzstreifen kammartig nebeneinander liegende Zinken aufweisen.

Weitere vorteilhafte Ausgestaltungen des Erfindungsgegenstandes sind in den weiteren Unteransprüchen 3–8 angegeben.

Ergänzend kann durch Auflegen eines Bleches auf die Zinken der Siloschneideinrichtung diese eine Schaufelfunktion übernehmen, wodurch Schüttgut, wie z.B. Treber, Rüben, Rübenschnitzel oder Feuchtgetreide, aufgenommen und nach Belieben verteilt werden kann. Der Wagen ermöglicht es weiterhin, auch Grossballen von Heu, Stroh und Corn-Cob-Mix zu verarbeiten, deren Handhabung für den Landwirt bisher ausserordentlich schwierig und aufwendig war.

Im folgenden wird ein Ausführungsbeispiel der Erfindung anhand von Zeichnungen näher beschrieben. Es zeigen:

Figur 1 eine Seitenansicht des erfindungsgemässen Aufnahme- und Verteilungswagens,

Figur 2 einen Längsschnitt durch den Wagen,

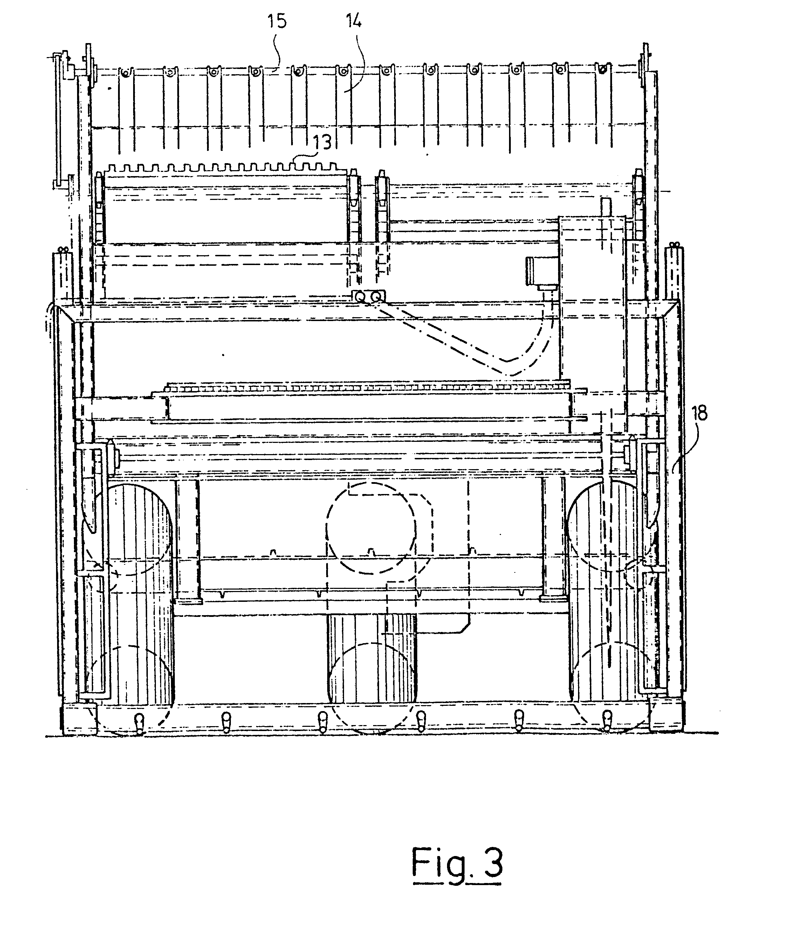

Figur 3 eine Ansicht der Aufnahmeseite des erfindungsgemässen Wagens und

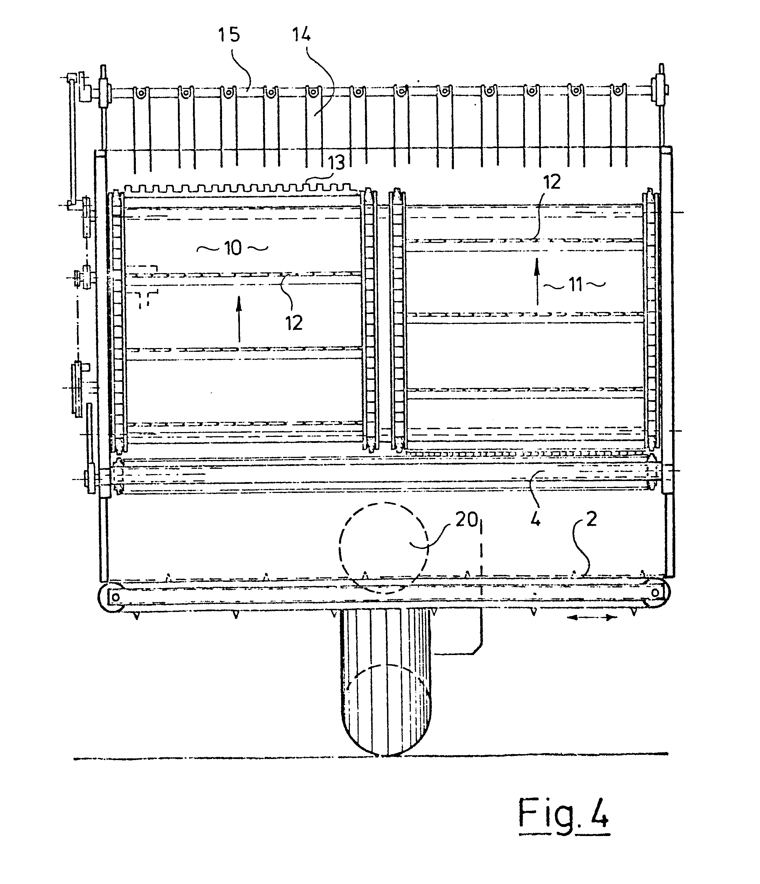

Figur 4 einen Querschnitt durch den Wagen.

Gemäss den Figuren weist der erfindungsgemässe Aufnahme- und Verteilungswagen einen Laderaum 1 sowie einen Fahrstand auf, die über einen Rahmen 25 von drei Rädern getragen werden. Am fahrstandfernen Ende des Laderaums 3 ist ein Siloschneidgerät 1 angeordnet, welches zugleich mit seinen Zinken 6 als Aufnahmegerät dient. Unterhalb des Fahrstandes befindet sich ein Antriebsrad 20, welches lenkbar ist. Unterhalb des fahrerseitigen Endes des Laderaums 3 ist eine seitlich ablegende Fördervorrichtung 2 für das auszutragende Gut angeordnet und durch diese Anordnung kann der Fahrer sowohl das Fahrzeug genauestens auch auf engstem Raum steuern als auch den Aufnahmevorgang und den Austragvorgang genauestens überwachen.

Unterhalb des Fahrersitzes befindet sich eine Hydraulikpumpe 19, die von einem Verbrennungsmotor angetrieben wird und neben den Hydraulikstrom für die Handhabung der Einzelteile des erfindungsgemässen Wagens auch den Hydraulikstrom zur Bewegung des Antriebsrades 20 liefert.

Das Siloschneidgerät weist eine U-förmige Brücke 5 auf, auf welcher ein Fahrwerk 8 bewegbar ist, welches ein auf- und abbewegtes Messer 7 trägt. Das Messer 7 kann eine oszillierende Bewegung in senkrechter Richtung machen und als sägendes Schneidmesser ausgebildet sein, es kann aber auch als Spatenmesser ausgebildet sein, welches jeweils einen Schneidhub nach einer bestimmten Vorschubbewegung des Fahrwerks 8 vornimmt.

Das Siloschneidgerät 1 weist weiterhin horizontal verlaufende Zinken auf, die in etwa einen Abstand von der Brücke 5 aufweisen, welcher der Länge des Messers 7 entspricht. Hinsichtlich weiterer Einzelheiten des Siloschneidgeräts 1 kann auf das deutsche Patent 2 307 689 des Anmelders verwiesen werden, so dass eine detailliertere Beschreibung entfallen kann.

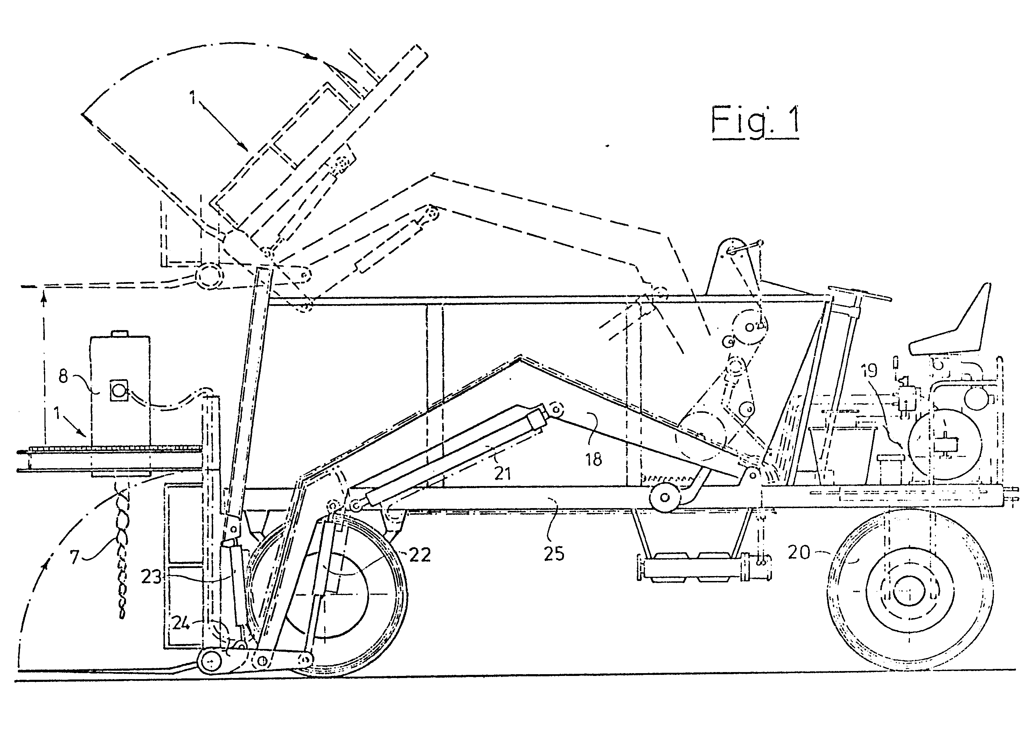

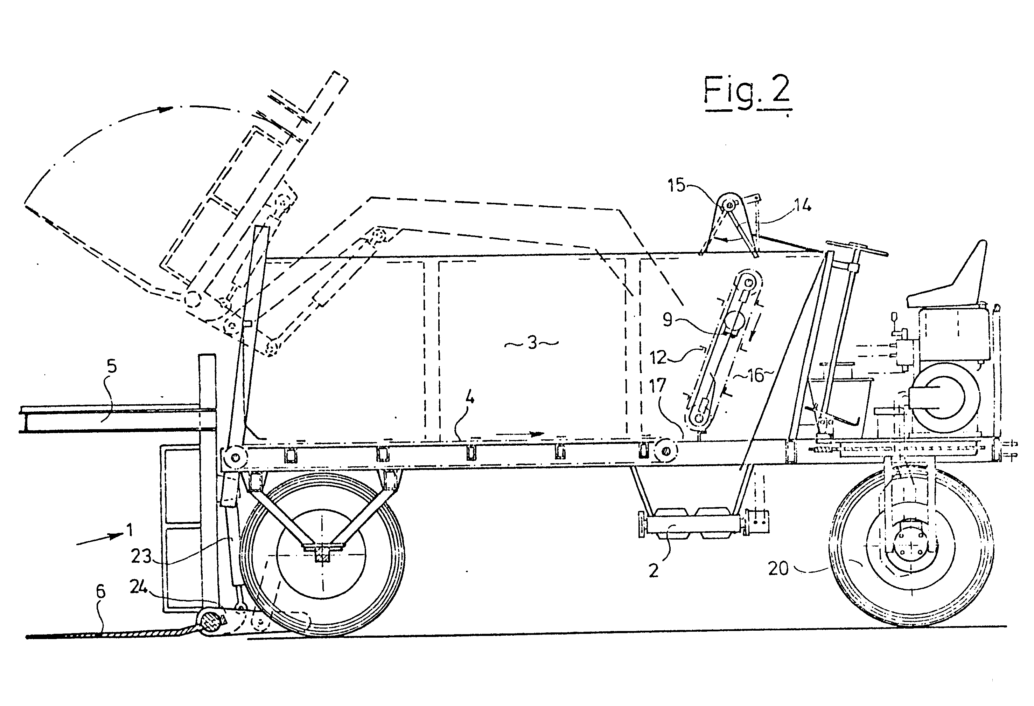

Vom Fahrer aus gesehen ist das Siloschneidgerät 1 am vorderen Ende des dort teilweise oder ganz geöffneten Laderaums 3 angeordnet und ist, wie in Figur 1 und 2 gestrichelt gezeichnet, heb- und kippbar. Da auch die Zinken 6 gekippt werden können, ist eine Bewegung der Zinken 6 über die Vertikale hinaus in den Bereich oberhalb des Laderaums 1 möglich, so dass sichergestellt wird, dass die aufgenommenen Silageblöcke, Grossballen oder dgl. in den Laderaum gekippt werden und kein Abfall vor dem Laderaum herabfällt.

Der Laderaum 3 weist fahrerseitig eine Austragvorrichtung 9 auf, die aus zwei nebeneinander liegenden Kratzbändern 10 und 11 besteht, welche von unten schräg nach hinten oben geneigt sind. Die hintere, fahrerseitige Querwand des Laderaums 3 weist eine entsprechende Neigung auf und zwischen den Kratzbändern 10 und 11 und der Querwand wird ein Förderschacht 16 gebildet.

Der Boden des Laderaums 3 wird von einem Kratzboden 4 gebildet, welcher vor dem unteren Umkehrpunkt der Kratzbänder 10 und 11 endet, so dass zwischen dem Kratzboden 4 und den Bändern 10 und 11 eine Öffnung entsteht, durch welches das Ladegut nach unten herabfallen kann, soweit es nicht von den Kratzbändern nach oben gefördert und in den Förderschacht 16 bewegt wird. Sowohl die Öffnung 17 als auch der Förderschacht 16 sind oberhalb einer quer verlaufenden seitlich austragenden Fördervorrichtung angeordnet, welche ein horizontal verlaufendes Förderband sein kann. Das Förderband kann teleskopierend sein und so direkt über Trögen abwerfen, die einen gewissen Abstand von dem Aufnahme- und Verteilungswagen aufweisen. Da dieser aber besonders gut dirigierbar ist, kann das Ende des Förderbandes bzw. der Fördervorrichtung 2 sicher über Trögen entlanggefahren werden, auch wenn diese direkt neben dem Wagen stehen.

Die Kratzbänder 10 und 11 weisen zur Bewegungsrichtung der Bänder quer verlaufende Kratzstreifen 12 auf, die Zinken 13 besitzen. Es wird damit sichergestellt, dass das durch den Kratzboden 4 herangeführte Gut durch die Bänder auch nach oben in den Förderschacht 16 gefördert wird. Die Kratzstreifen des Kratzbodens 4 selbst sind gering ausgeprägt, um unter dem sich vor der Austragvorrichtung 9 stauenden Gut durchlaufen zu können.

Oberhalb der Austragvorrichtung 9 sind in einer Reihe federnde Zinken 14 angebracht, die auf einer in einer Drehbewegung oszillierenden Welle 15 befestigt sind. Die Zinkenspitzen bewegen sich dabei vor dem oberen Umkehrpunkt der Bänder 10 und 11 und stellen sicher, dass nicht genügend zerpflücktes Gut über den oberen Umkehrpunkt umläuft und den Förderschacht 16 verstopfen könnte. Der Förderschacht 16 ist oben durch ein schräg nach vorn oben verlaufendes Blech abgedeckt, so dass das durch die federnden Zinken 14 zerpflückte Gut nach unten in den Förderschacht 16 gedrückt wird.

Das Siloschneidgerät 1 ist an hydraulisch betätigten Schwenkhebeln 24 gelagert, welche ihrerseits vom längs des Laderaums verlaufenden Lenkern 18 getragen werden. Die Lenker 18 sind nahe dem Fahrstand am Rahmen 25 angelenkt und am Aufnahmeende sind Hydraulikkolben-Zylindereinheiten zum Anheben der Lenker angelenkt, deren anderes Ende an den Lenkern verschwenkbar befestigt sind. Durch das Ausfahren des Kolbens der Einheit 21 wird das Anheben des Siloschneidgerätes 1 ermöglicht, bis es in der in den Figuren gestrichelten Stellung liegt. Über die an den Schwenkhebeln 24 angelenkten Hydraulikkolben-Zylindereinheiten 22 kann dann ein Verschwenken des Siloschneidgerätes 1 erfolgen, wodurch die aufgenommenen Blöcke oder Ballen in den Bereich oberhalb des Laderaumes 3 bewegt werden. Durch eine Bewegung der Aufnahmezinken 6 durch eine weitere Hydraulikkolben-Zylindereinheit 23 können die Zinken dann über die Vertikale hinaus in den Bereich oberhalb des Laderaums 3 geschwenkt werden, wodurch die aufgenommenen Blöcke oder Ballen sicher in den Laderaum abgeworfen werden, falls sie nicht bereits allein in diesen über die Zinken gerutscht sind. Die Zinken befinden sich dann nach dem Verschwenken in der Ebene der U-förmigen Brücke 5, wobei diese durch ihre grosse Öffnung den Abwurfvorgang nicht behindern kann. Es ist daher nicht nur möglich, Blöcke mit einer Höhe gemäss dem Abstand zwischen der Brücke 5 und den Zinken 6 zu verarbeiten, sondern es können auch Grossballen aufgenommen werden, da deren Durchmesser nicht wesentlich grösser ist, als die Auskragung der Brücke 5.

Nach dem Einkippen des zu verteilenden Gutes wird das Siloschneidgerät wieder abgesenkt und eine erneute Aufnahme kann erfolgen, bis der Laderaum gefüllt ist und daraufhin kann nach Anfahren des Verteilungsbereiches mit der Verteilung begonnen werden.

**Patentansprüche**

1. Aufnahme- und Verteilungswagen für Silage, Stroh und dergleichen Gut, mit einem Laderaum (3), der an seiner einen Querseite eine Schneideinrichtung (1) für Silageblöcke mit einem an einer U-förmigen Brücke (5) umlaufenden länglichen Messer (7) und mit in einer in einem etwa der Länge des Messers entsprechenden Abstand gelegenen Ebene zur Brücke (5) parallel verlaufenden Zinken (6) zur Gutaufnahme aufweist, und der an seiner anderen Querseite eine das auszutragende Gut seitlich austragende Fördereinrichtung (2) aufweist, wobei die Schneideinrichtung (1) über wenigstens einen Lenker (18) heb- und senkbar und an dessen Ende um eine horizontale Achse verschwenkbar ist, dadurch gekennzeichnet,
– dass die Zinken (6) zur Brücke (5) der Schneideinrichtung (1) hydraulisch schwenkbar sind,
– dass die Schneideinrichtung (1) in ihrem unteren Teil über hydraulisch betätigte Schwenkhebel (24) an zwei hydraulisch heb- und senkbaren Lenkern (18) angelenkt ist, die beidseitig neben dem Laderaum (3) verlaufen und an welchen die Schneideinrichtung (1) ein Einkippen des von den Zinken (6) getragenen Gutes von oben in den Laderaum (3) ermöglichend hebbar und über den Laderaum (3) kippbar ist, und
– dass der Boden des Laderaums (3) als Kratzförderer (4) ausgebildet ist.

2. Aufnahme- und Verteilungswagen nach Anspruch 1, dadurch gekennzeichnet, dass oberhalb der Fördereinrichtung (2) eine Austragsvorrichtung (9) angeordnet ist, welche zumindest aus einem von unten nach oben schräg nach vorn geneigten Kratzband (10 o. 11) besteht, dessen Kratzstreifen (12) kammartig nebeneinander liegende Zinken (13) aufweisen.

3. Aufnahme- und Verteilungswagen nach Anspruch 2, dadurch gekennzeichnet, dass die Austragsvorrichtung (9) aus zwei nebeneinander liegenden Bändern (10, 11) besteht, deren Kratzstreifen (12) gegeneinander versetzt sind.

4. Aufnahme- und Verteilungswagen nach einem der Ansprüche 1 bis 3, dadurch gekennzeichnet, dass über den Kratzbändern (10, 11) eine Reihe von abwärts gerichteten federnden Zinken (14) angeordnet sind.

5. Aufnahme- und Verteilungswagen nach einem der Ansprüche 1 bis 4, dadurch gekennzeichnet, dass die federnden Zinken (14) an einer eine oszillierende Drehbewegung ausführenden Welle (15) angebracht sind, so dass die Zinkenspitzen den Bereich vor dem oberen Umkehrpunkt der Kratzbänder (10, 11) überstreichen.

6. Aufnahme- und Verteilungswagen nach einem der Ansprüche 1 bis 5, dadurch gekennzeichnet, dass zwischen der Austragsvorrichtung und der zweiten Querwand ein abwärts führender Förderschacht gebildet wird, unter welchem die seitlich austragende Fördervorrichtung angeordnet ist.

7. Aufnahme- und Verteilungswagen nach einem der Ansprüche 1 bis 6, dadurch gekennzeichnet, dass zwischen dem unteren Umkehrpunkt der Kratzbänder (10, 11) und dem kratzbandseitigen Umkehrpunkt des Kratzbodens (4) eine den Durchtritt des zu verteilenden Gutes gestattende Öffnung (17) besteht, die ebenfalls über der seitlich austragenden Fördervorrichtung (2) vorliegt.

8. Aufnahme- und Verteilungswagen nach einem der Ansprüche 1 bis 7, dadurch gekennzeichnet, dass er selbstfahrend ausgebildet ist und eine von einem Verbrennungsmotor angetriebene Pumpe (19) sowohl ein Antriebsrad (20) als auch die Hydraulikkolben (21, 22, 23) antreibt.

**Claims**

1. A pick-up and distributing car for silage, straw and the like material, comprising a loading compartment (3) which includes at the one transverse side thereof a cutting device (1) for silage blocks, provided with an elongated cutter (7) which rotates on a U-shaped bridge (5), and provided with prongs (6) for pick-up of the material and extending in parallel with the bridge (5) with a spacing therefrom corresponding approximately to the length of the cutter, and (said loading compartment) including at its opposite transverse side a conveyor device (2) for laterally discharging the material to be discharged; wherein the cutting device (1) is adapted to be raised and lowered through at least one link (18), and is pivotable about a horizontal axis at the one end of said link; characterized in
– that the prongs (6) are adapted to be pivoted hydraulically relative to the bridge (5) of the cutting device (1);
– that the cutting device (1) has its lower portion pivoted to a pair of hydraulically raisable and lowerable links (18) through hydraulically operated swing arms (24), which links extend on either side adjacent to the loading compartment (3) and on which the cutting device (1) is adapted to be raised and swung above the loading compartment (3) so as to allow the material supported by the prongs (6) to be dropped into the loading compartment (3) from above; and
– that the bottom of the loading compartment (3) is formed as a scraper conveyor (4).

2. The pick-up and distributing car according to claim 1, characterized in that a discharging device (9) is provided above the conveyor device (9), the discharging device comprising at least one scraper belt (10 or 11) extending from below obliquely upwards to the front and the scraper strips (12) of which include prongs (or tines) (13) arranged in sidy-by-side relation in a comb-shaped configuration.

3. The pick-up and distributing car according to claim 2, characterized in that the discharging device (9) comprises a pair of parallely disposed belts (10, 11) the scraper strips (12) of which are staggered relative to each other.

4. The pick-up and distributing car according to any one of claims 1 to 3, characterized in that a series of downwardly directed, resilient prongs (or tines) (14) are positioned above the scraper belts (10, 11).

5. The pick-up and distributing car according to any one of claims 1 to 4, characterized in that the resilient prongs (or tines) (14) are mounted to a shaft performing an oscilating rotational movement, such that the tip ends of the prongs (or tines) scrape across the region in front of the upper point of reversal of the scraper belts (10, 11).

6. The pick-up and distributing car according to any one of claims 1 to 5, characterized in that a downwardly extending conveying duct is defined between the discharging device and the second transverse wall, with the laterally discharging conveyor device being disposed below said duct.

7. The pick-up and distributing car according to any one of claims 1 to 6, characterized in that an opening (17) is present between the lower point of reversal of the scraper belts (10, 11) and the scraper belt-side point of reversal of the scraper bottom (4), said opening permitting passage therethrough of the material to be distributed and being provided also above the laterally discharging conveyor device (2).

8. The pick-up and distributing car according to any one of claims 1 to 7, characterized in that the car is designed to be self-propelled, and a pump (19) driven by an internal combustion engine operates both a driving wheel (20) and the hydraulic pistons (21, 22, 23).

**Revendications**

1. Chariot de réception et distribution de silage, paille et produits analogues, comportant un espace de chargement (3) qui présente sur son premier côté transversal un dispositif (1) de découpage de blocs de silage doté d'un couteau oblong (7) tournant sur un pont (5) en forme de U, et des dents de réception de produit (6), lesquelles sont parallèles et sont dans un plan situé, par rapport au pont (5), à une distance correspondant à peu près à la longueur du couteau, et qui présente sur son autre côté transversal un dispositif transporteur (2) évacuant latéralement le produit à décharger, le dispositif de découpage (1) pouvant être levé et abaissé par au moins un bras oscillant (18) et étant, par son extrémité, monté à pivotement autour d'un axe horizontal, caractérisé

– par le fait que les dents (6) sont mobiles par pivotement commandé hydrauliquement, par rapport au pont (5) du dispositif de découpage (1);

– par le fait que, dans sa partie inférieure, le dispositif de découpage (1) est articulé, par l'intermédiaire de leviers pivotants (24) actionnés hydrauliquement, sur deux bras oscillants (18) pouvant être levés et abaissés hydrauliquement, lesquels sont disposés de part et d'autre et à proximité de l'espace de chargement (3), le dispositif de découpage (1) pouvant être levé et basculé par-dessus l'espace de chargement (3) au moyen de ces bras oscillants, d'une manière autorisant un pivotement du produit porté par les dents (6), ayant pour effet de le faire entrer par le haut dans l'espace de chargement (3); et

– par le fait que le fond de l'espace de chargement (3) est aménagé en transporteur à raclettes (4).

2. Chariot de réception et distribution selon revendication 1, caractérisé par le fait qu'au-dessus du dispositif transporteur (2) est agencé un dispositif d'extraction (9) qui est constitué par au moins une bande à raclettes (10 ou 11) dont les bandes de raclage (12) présentent des dents (13) situées côte à côte à la manière de dents de peigne.

3. Chariot de réception et distribution selon revendication 2, caractérisé par le fait que le dispositif d'extraction (9) est constitué de deux bandes situées côte à côte (10, 11) dont les bandes de raclage (12) sont mutuellement décalées.

4. Chariot de réception et distribution selon l'une quelconque des revendications 1 à 3, caractérisé par le fait qu'une série de dents élastiques (14) dirigées vers le bas est agencée au-dessus des bandes à raclettes (10, 11).

5. Chariot de réception et distribution selon l'une quelconque des revendications 1 à 4, caractérisé par le fait que les dents élastiques (14) sont agencèes sur un arbre exécutant un mouvement de rotation oscillant, de manière que les pointes des dents balayent la région située devant le point de renvoi supérieur des bandes à raclettes (10, 11).

6. Chariot de réception et distribution selon l'une quelconque des revendications 1 à 5, caractérisé par le fait qu'une gaine de transport allant vers le bas est formée entre le dispositif d'extraction et la deuxième paroi transversale, le dispositif transporteur effectuant l'extraction latérale étant disposé en dessous de cette gaine.

7. Chariot de réception et distribution selon l'une quelconque des revendications 1 à 6, caractérisé par le fait qu'il y a, entre le point de renvoi inférieur des bandes à raclettes (10, 11) et le point de renvoi que le fond à raclettes (4) présente côté bandes à raclettes, une ouverture (17) autorisant le passage du produit à distribuer, cette ouverture étant en outre située au-dessus du dispositif transporteur (2) effectuant l'extraction latérale.

8. Chariot de réception et distribution selon l'une quelconque des revendications 1 à 7, caractérisé par le fait qu'il est automobile, et qu'une pompe (19) entraînée par un moteur à combustion entraîne aussi bien une roue motrice (20) que les pistons hydrauliques (21, 22, 23).

Fig. 1

0 102 406

## Fig.2

Fig. 3

Fig.4